# EUROPÄISCHE PATENTSCHRIFT

(11) **EP 3 019 749 B1**
(45) Veröffentlichungstag und Bekanntmachung des Hinweises auf die Patenterteilung: **17.04.2019**
(21) Anmeldenummer: 14736358.4
(22) Anmeldetag: 01.07.2014
(51) Int. Cl.: F04C 14/22, F15B 11/16

(54) **VERSTELLPUMPE UND GETRIEBESTEUERUNG**
VARIABLE DISPLACEMENT PUMP AND GEARBOX CONTROL SYSTEM
POMPE À CYLINDRÉE VARIABLE ET COMMANDE DE BOÎTE DE VITESSES

(30) Priorität: 08.07.2013 DE 102013107180
(43) Veröffentlichungstag der Anmeldung: 18.05.2016
(73) Patentinhaber: Magna Powertrain Bad Homburg GmbH, 61352 Bad Homburg (DE)
(72) Erfinder: HOLTMANN, Ludger, 85664 Hohenlinden (DE); MAUSER, Thilo, 61118 Bad Vilbel (DE); NGUYEN, Van Doan, 61267 Neu-Anspach (DE)
(74) Vertreter: Rausch, Gabriele
(86) Internationale Anmeldenummer: PCT/EP2014/064002
(87) Internationale Veröffentlichungsnummer: WO 2015/003960

(56) Entgegenhaltungen:
- WO-A1-98/28179
- WO-A2-2012/149931
- FR-A1- 2 826 408
- US-A- 5 875 630

## Beschreibung

Die Erfindung betrifft eine Verstellpumpe für hydraulische Getriebesteuerungen, insbesondere Flügelzellenpumpe, mit variablem Hubvolumen und mit einem Pumpenregler für Ablauf - Druckregelung, bei welchem der Auslassdruck der Pumpe in einer Kompensationskammer und ein durch den Pumpenregler einstellbarer Regeldruck in einer Regeldruckkammer auf einen verstellbaren Hubring wirkt, wobei der Druck in der Regeldruckkammer sowie eine zusätzliche Federkraft den Hubring in Richtung maximale Ausschwenkung, d. h. maximales Hubvolumen, verstellt, und mit einer Getriebesteuerung für Automatikgetriebe, welche unter anderem einen Primärhydraulikkreis für die kraftübertragungsrelevanten Elemente des Getriebes aufweist und ein Primärdruckregelventil, welches bei Erreichen bzw. Überschreiten des einstellbaren Primärdrucks einen Bypass zu einem Sekundärhydraulikkreis öffnet und bei weiterem Überschreiten des Primärdrucks eine zusätzliche Druckbegrenzungsfunktion für den Primärdruck aufweist, und wobei der Sekundärhydraulikkreis der Kühlung und Schmierung des Getriebes dient.

Derartige Verstellpumpen für hydraulische Getriebesteuerungen für Automatikgetriebe sind aus der WO2012149931 A1 bekannt.

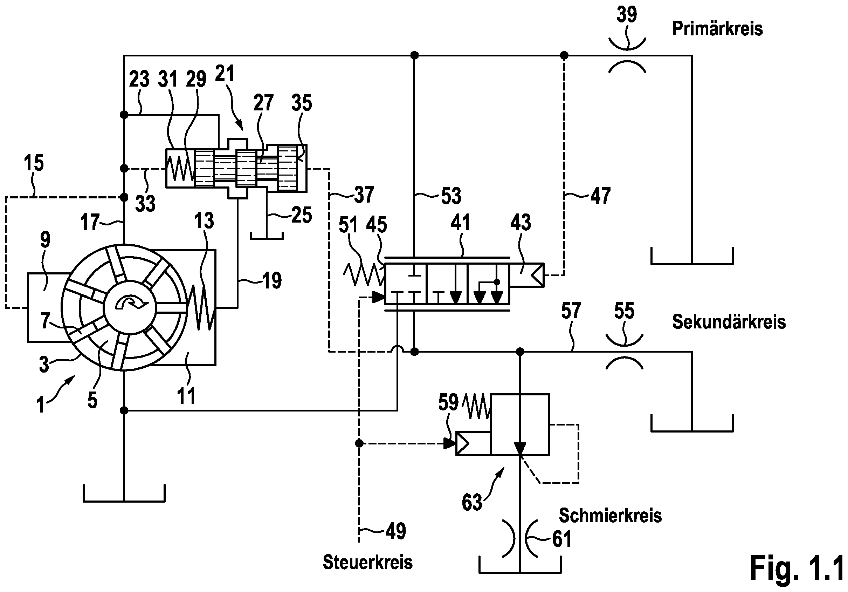

So gibt es beispielsweise Regelkreise, bei denen zunächst nur das Primärdruckregelventil wirksam wird und ab Erreichen des eingestellten Primärdrucks die Verbindung zum Sekundärhydraulikkreis öffnet und dann der im Sekundärhydraulikkreis wirkende Druck auf den Pumpenregler wirksam wird, sodass dann die Pumpenregelung in Richtung einer zurückschwenkenden bzw. abregelnden Pumpe verstellt wird, d.h. das Fördervolumen wird kleiner. Dadurch entsteht eine sogenannte Kaskadenregelung bzw. Reihenschaltung zweier Reglersysteme, nämlich des Primärdruckregelventils und des Pumpenreglers, welche sich in ihren Regelbewegungen bzw. Regelverhalten gegeneinander beeinflussen können, wobei die Pumpenregelung auf Grund der nachgeschalteten Sekundärdruckbeaufschlagung zeitverzögert hinter dem Einregeln des Primärdruckes durch das Primärdruckregelventil aktiv wird (Figur 1.1).

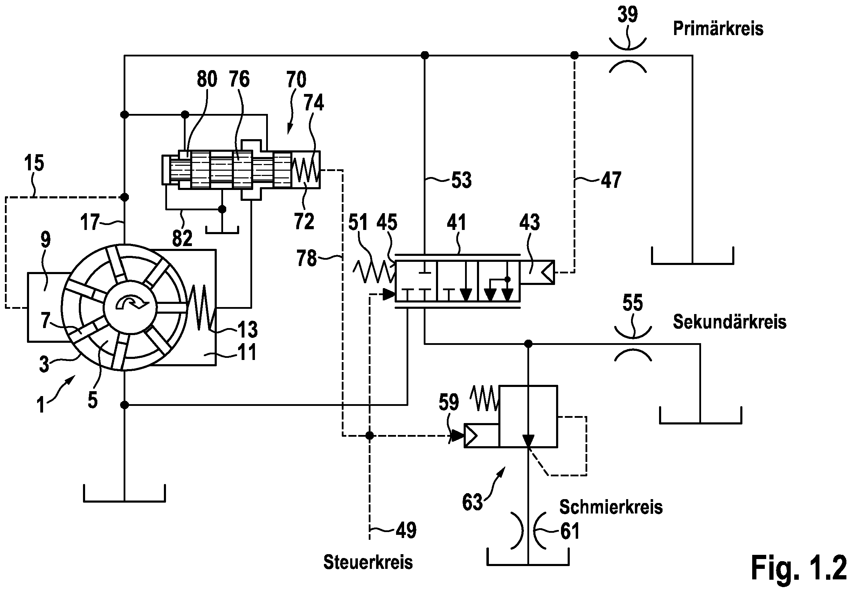

Weiterhin sind im Stand der Technik Regelkreise mit einer Verstellpumpe und einem Automatikgetriebe bekannt, bei welchen ein separater Steuerdruck aus einem Steuerkreis gleichzeitig auf den Pumpenregler der Verstellpumpe, das Primärdruckregelventil und gegebenenfalls ein Druckminderventil im Sekundär- bzw. Schmierkreis wirksam wird. Das bedeutet, dass je nach Abstimmung gegebenenfalls gleichzeitig drei unterschiedliche Regler, welche alle durch die gleiche Drucksignalgröße wirksam werden, eingreifen und damit, je nach ihrem Zeitverhalten, sich gegenseitig beeinflussen und zu Instabilitäten führen können (Figur 1.2).

Es ist daher Aufgabe der Erfindung, eine Verstellpumpe für hydraulische Getriebesteuerungen und eine Getriebesteuerung für Automatikgetriebe dazustellen, welche diese Probleme nicht aufweist.

Die Aufgabe wird gelöst durch eine Verstellpumpe für hydraulische Getriebesteuerungen, insbesondere Flügelzellenpumpe, mit variablem Hubvolumen und mit einem Pumpenregler für Ablauf - Druckregelung, bei welchem der Auslassdruck der Pumpe in einer Kompensationskammer und ein durch den Pumpenregler einstellbarer Regeldruck in einer Regeldruckkammer auf einen verstellbaren Hubring wirkt, wobei der Druck in der Regeldruckkammer sowie eine zusätzliche Federkraft den Hubring in Richtung maximale Ausschwenkung, d.h. maximales Hubvolumen verstellt, und mit einer Getriebesteuerung für Automatikgetriebe, welche unter anderem einen Primärhydraulikkreis für die kraftübertragungsrelevanten Elemente des Getriebes aufweist und ein Primärdruckregelventil, welches bei Erreichen bzw. Überschreiten des einstellbaren Primärdrucks einen Bypass zu einem Sekundärhydraulikkreis öffnet und bei weiterem Überschreiten des Primärdrucks eine zusätzliche Druckbegrenzungsfunktion für den Primärdruck aufweist, und wobei der Sekundärhydraulikkreis der Kühlung und Schmierung des Getriebes dient,

wobei durch ein (zusätzliches) Schaltventil die Regelschleifen bzw. Regelkreise der Pumpenregelung und der Getriebe- (Primärdruck-) regelung voneinander abtrennbar sind und somit unabhängig einzeln zuschaltbar oder zusammenschaltbar sind.

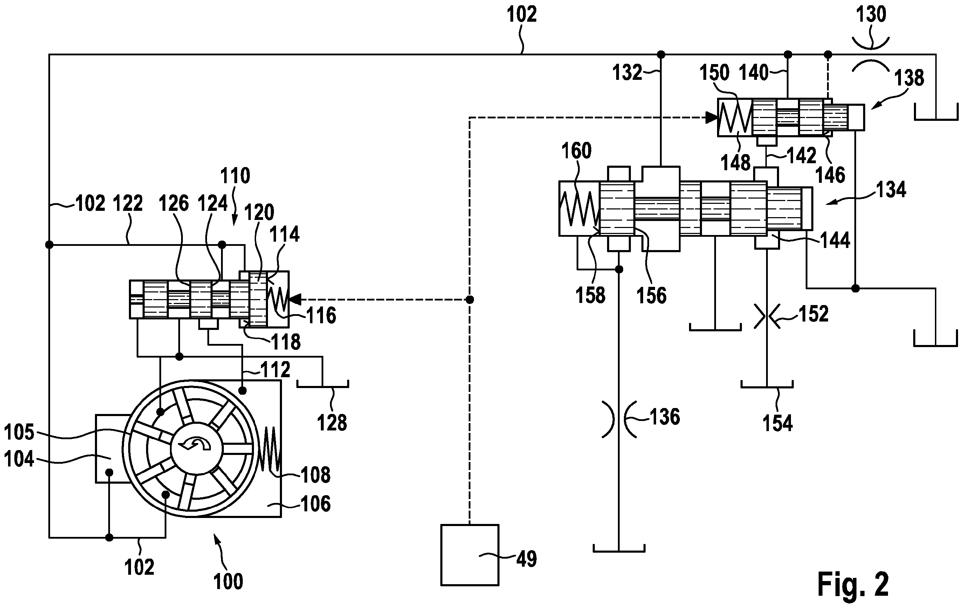

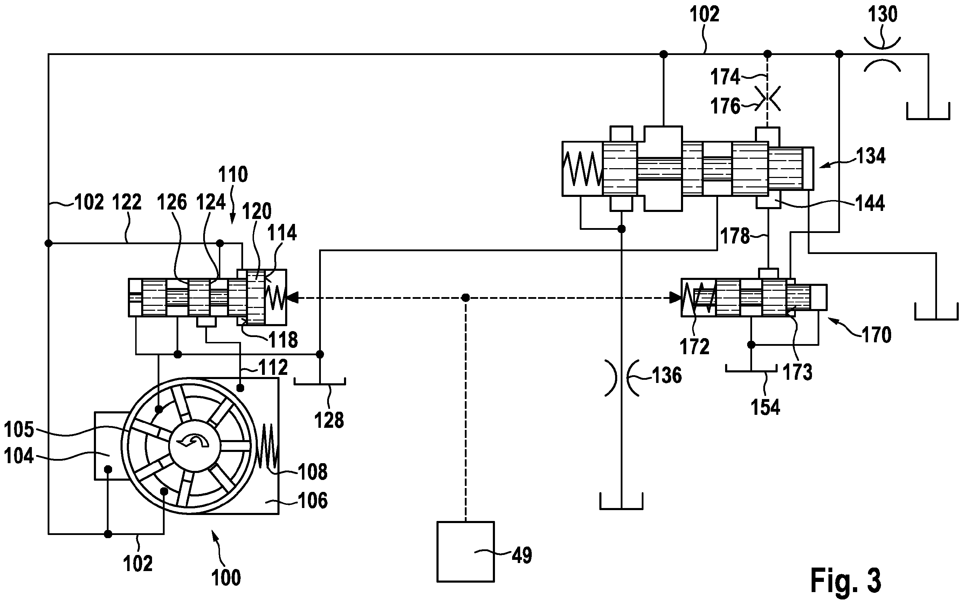

Eine weitere Verstellpumpe und Getriebesteuerung zeichnet sich dadurch aus, dass durch das Schaltventil eine Fühldruckkammer des Primärdruckregelventils für den Primärdruck gegenüber dem Primärhydraulikkreis über den Zufluss der Fühldrucckammer oder über den Abfluss der Fühldruckkammer zu- oder abgeschaltet werden kann (Figur 2 und 3).

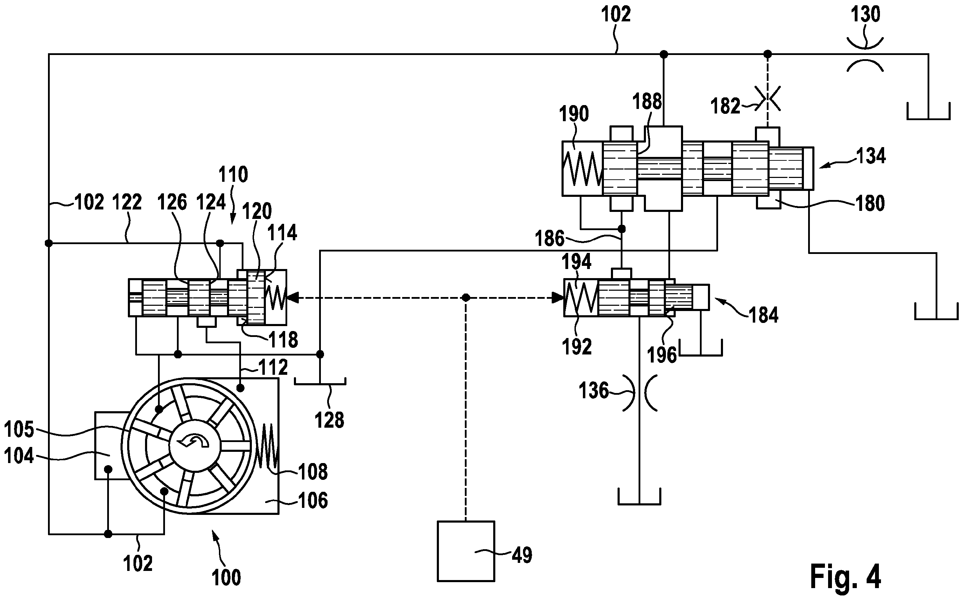

Auch wird eine Verstellpumpe und Getriebesteuerung bevorzugt, bei welcher durch das Schaltventil der Sekundärhydraulikkreiszufluss bzw. die Sekundärhydraulikkreisverbindung vom Primärdruckregelventil zu- oder abschaltbar ist (Figur 4).

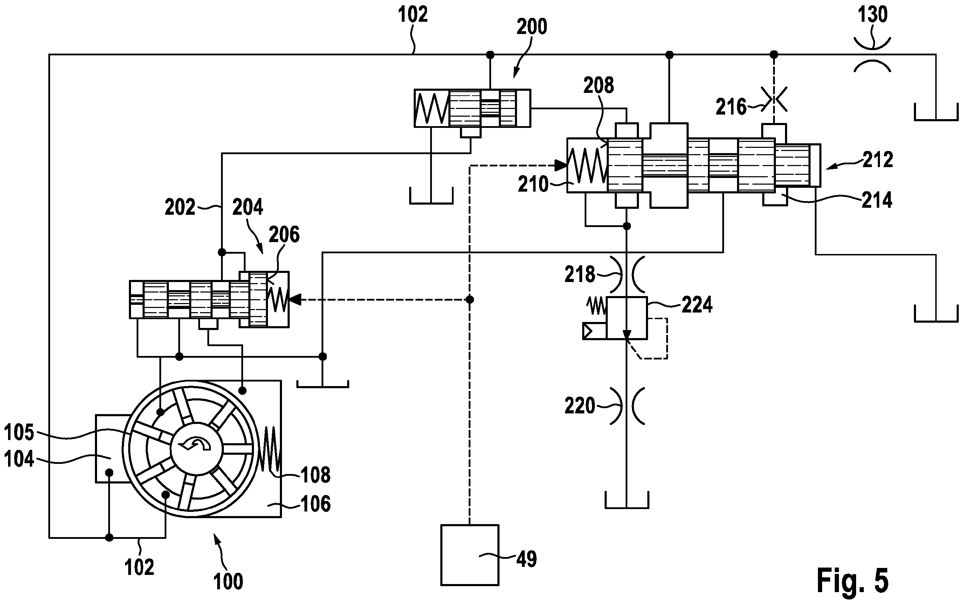

Weiterhin wird eine Verstellpumpe und Getriebesteuerung bevorzugt, bei welcher der Zufluss bzw. die Verbindung zum Pumpenregler bzw. zur Regeldruckkammer aus dem Primärdruckkreis bzw. Primärhydraulikkreis durch das Schaltventil zu- oder abgeschaltet werden kann (Figur 5).

Eine weitere Verstellpumpe und Getriebesteuerung zeichnet sich dadurch aus, dass der Zufluss der Fühldruckkammer des Primärdruckregelventils vom Primärhydraulickreis durch das Ventil zu- bzw. abschaltbar ist und der Abfluss der Fühldruckkammer über einen hydraulischen Widerstand z. B. eine Drossel zu einem Tank bzw. Ölsumpf erfolgt.

Ebenso wird eine Verstellpumpe und Getriebesteuerung bevorzugt, bei welcher der Abfluss der Fühldruckkammer zum Tank bzw. Ölsumpf durch das Ventil zu- bzw. abschaltbar ist und der Zufluss zur Fühldruckkammer vom Primärhydraulikkreis über einen hydraulischen Widerstand, z. B. eine Drossel erfolgt.

Auch wird eine Verstellpumpe und Getriebesteuerung bevorzugt, bei welcher ein Steuerdruck eines Steuerdruckkreises der Getriebesteuerung auf eine Fläche der Regeldruckkammer des Pumpenreglers wirkt (große Fläche, Federraum, aufregelnd) und auf das Schaltventil (Federraumfläche) schließend (Abbildung 2, Schaltventil schaltet Zufluss der Fühldruckkammer).

Eine weitere Verstellpumpe und Getriebesteuerung zeichnet sich dadurch aus, dass der Steuerdruck der Getriebesteuerung auf eine Fläche der Regeldruckkammer des Pumpenreglers wirkt (große Fläche, Federraum, aufregelnd) und auf den Federraum des Schaltventils öffnend (Abbildung 3, Abfluss der Fühldruckkammer des Primärdruckregelventils).

Ebenso wird eine Verstellpumpe und Getriebesteuerung bevorzugt, bei welcher der Steuerdruck der Getriebesteuerung auf eine Fläche der Regeldruckkammer des Pumpenreglers wirkt (große Fläche, Federraum, aufregelnd) und auf den Federraum des Schaltventils öffnend (Abbildung 4, Schaltventil schaltet Zufluss zum Sekundärhydraulikkreis).

Weiterhin zeichnet sich eine Verstellpumpe und Getriebesteuerung dadurch aus, dass ein Steuerdruck der Getriebesteuerung auf eine Fläche der Regeldruckkammer des Pumpenreglers wirkt (große Fläche, Federraum, aufregelnd) und auf den Federraum des Primärdruckventils, und der Sekundärdruck öffnend auf das Schaltventil wirkt (Abbildung 5; Schaltventil regelt Zufluss aus Primärhydraulikkreis zum Pumpenregler; Pumpenregler regelt mit Primärdruck zurück).

Auch eine bevorzugte Verstellpumpe und Getriebesteuerung zeichnet sich dadurch aus, dass das Schaltventil bzw. die Schaltventile hydraulisch und/oder elektrisch ansteuerbar sind.
- Figur 1.1: zeigt eine Verstellpumpe mit Getriebesteuerung nach dem Stand der Technik.
- Figur 1.2: zeigt eine andere Verstellpumpe mit Getriebesteuerung nach dem Stand der Technik.
- Figur 2: zeigt eine erste erfindungsgemäße Ausführung einer Verstellpumpe mit Getriebesteuerung.
- Figur 3: zeigte zweite erfindungsgemäße Ausführung einer Verstellpumpe mit Getriebesteuerung.
- Figur 4: zeigt eine dritte erfindungsgemäße Ausführung einer Verstellpumpe mit Getriebesteuerung.
- Figur 5: zeigt eine vierte erfindungsgemäße Ausführung einer Verstellpumpe mit Getriebesteuerung.

In Figur 1 ist eine verstellbare Flügelzellenpumpe 1 mit variablem Hubvolumen und einer Getriebesteuerung für Automatikgetriebe dargestellt. Die Flügelzellenpumpe 1 mit variablem Hubvolumen weist einen verschiebbaren Hubring 3 auf, der gegenüber einem Rotor 5 in seiner maximal ausgelenkten Stellung dargestellt ist. Im Rotor 5 sind in radialen Schlitzen radial verschiebbare Flügel 7 angeordnet. Auf den verschiebbaren Hubring 3 wirkt der Druck in einer sogenannten Kompensationskammer 9 in Richtung eines Zurückschwenkens des Hubringes 3 bis hin zu einer Nullförderung der Pumpe, auf der entgegengesetzten Seite wirkt auf den verschiebbaren Hubring 3 der Druck in einer sogenannten Regeldruckkammer 11 auf eine Druckwirkfläche, die größer ist als die Druckwirkfläche der Kompensationskammer, wobei der Hubring 3 durch eine Feder 13 zusätzlich in Richtung des Ausschwenkens 3, also in Richtung des maximalen Hubvolumens der Flügelzellenpumpe 1 wirkt. Die Feder 13 wirkt auch nach Abschalten der Pumpe und des Getriebes in Richtung maximaler Auslenkung des Hubrings 3, um eine sofortige Ölversorgung und ein Anfahren des Getriebes beim Start des Kraftfahrzeuges zu ermöglichen. Die Kompensationskammer 9 ist über eine gestrichelt dargestellte Steuerölleitung 15 mit der Leitung 17 am Pumpenauslass, also mit dem vom der Pumpe erzeugbaren Maximaldruck beaufschlagt. Die Regeldrucckammer 11 der verstellbaren Flügelzellenpumpe 1 ist über eine Steuerölleitung 19 mit einem Regelventil 21, auch Pumpenregler genannt, verbunden, wobei der Pumpenregler den Regeldruck in der Regeldruckkammer 11 bzw. in der Zuführleitung 19 zwischen einem Druck aus dem Pumpenauslass mit der Leitung 17, welcher über die Leitung 23 dem Regelventil 21 zugeführt wird, und einem Tankdruck in einer Tankleitung 25 variiert. Das Regelventil 21 bzw. der Pumpenregler weist einen Regelkolben 27 auf, welcher auf einer Seite mit einer Feder 29 und dem Druck in einer Kammer, weleher auf eine kleine Druckwirkfläche 31 des Regelkolbens 27 wirkt und die über eine Steuerleitung 33 mit dem Pumpenauslassdruckbereich verbunden ist, in eine öffnende Richtung wirkt, sodass der Regelkolben 27 die Regeldruckkammer 11 zunächst ungedrosselt mit dem Pumpenauslassdruck in der Leitung 17 verbindet, während die Verbindung der Regeldruckkammer 11 über den Regelkolben 27 zum Tankabfluss mit der Tankleitung 25 absperrt. Auf eine große Druckwirkfläche 35 des Regelventilkolbens 27 wirkt der Druck aus einem Steuerkreis 49 des Getriebes in einer Steuerdruckleitung 37, wobei dieser Steuerdruck durch die internen Programmabläufe des Automatikgetriebes eingestellt bzw. variiert wird. Der Volumenstrom der Pumpe vom Pumpenauslass der Leitung 17 führt zu einem Primärhydraulikkreis 39 des Getriebes, welcher alle kraftrelevanten Elemente wie beispielsweise hydraulisch schaltbare Kupplungen, Bremsbänder, Synchronisierungsvorrichtungen für Zahnräder oder verstellbare Kegelscheiben und Anpresszylinder, beispielsweise für CVT-Getriebe, versorgt. Beim Starten des Kraftfahrzeuges wird also zuerst über die Pumpenauslassleitung 17 der Primärhydraulikkreis 39 mit dem Pumpenvolumenstrom versorgt, bis sich im Primärhydraulikkreis 39 ein entsprechender Primärdruck, welcher zur Betätigung der vorabgenannten Getriebeelemente benötigt wird, aufgebaut hat. Ein Primärdruckregelventil 41 bleibt bis zu diesem Betriebspunkt geschlossen. Das Primärdruckregelventil 41 weist eine hydraulische Druckkammer 43 mit einer Steuerfläche auf, auf welche über eine Steuerleitung 47 der Primärdruck wirken kann. Auf der entgegengesetzten Seite weist das Primärdruckregelventil eine hydraulische Steuerfläche 45 auf, auf welche der Druck im Steuerkreis 49 wirken kann, und eine Feder 51, welche zusammen mit dem Druck im Steuerkreis 49 in schließende Richtung auf das Primärdruckregelventil 41 wirkt. Wird im Primärhydraulikkreis 39 der entsprechende Primärdruck in der Druckkammer 43 des Primärdruckregelventils so weit überschritten, dass er gegenüber dem Druck im Steuerkreis 49 und der Federkraft 51 das Primärdruckregelventil 41 öffnen kann, so strömt ein Bypassvolumenstrom durch die Leitung 53, zu einem sogenannten Sekundärhydraulikkreis 55, der zur Kühlung und Schmierung der entsprechenden Getriebekomponenten dient. Der Druck, der sich dabei in diesem Sekundärhydraulikkreis 55 in der Leitung 57 aufbaut, wird dabei auch auf den Pumpenregler 21 über die Leitung 37 wirksam und führt dazu, dass bei hinreichendem Volumenstrombedarf und den entsprechenden, dadurch verursachten Druckaufbauten im Primär- und Sekundärhydraulikkreis der Pumpenregler einen geringeren Regeldruck als den Druck am Pumpenauslass 17 in der Regeldruckkammer 13 einstellt, sodass die Verstellpumpe 1 entsprechend dem nur maximal benötigen Volumenstrombedarf zurückschwenkt. Der Druck im Steuerkreis 49 wirkt zusätzlich auf eine zusätzliche Druckwirkfläche 59 eines Druckminderventiles 63, über welches nach Erreichen des dort eingestellten Druckes für einen Schmierhydraulikkreis 61 ein Bypassvolumenstrom zu diesem separaten Schmierhydraulikkreis 61 entsprechend gedrosselt wird. Der am Druckminderventil 63 eingestellte Druck wird somit durch den Steuerkreisdruck verändert.

Die hier dargestellte Schaltung nach dem Stand der Technik hat die (nachteilige) Funktion, dass zunächst der Primärhydraulikkreis 39 den benötigen Druckaufbau vollziehen muss und danach erst das Primärdruckregelventil 41 die Leitung zum Sekundärhydraulikkreis 55 öffnet, sodass erst dann ein entsprechender Regeldruck auf den Pumpenregler 21 wirkt und die Pumpe 1 entsprechend auf den maximal benötigten Volumenstrom zurückschwenken kann, welcher beispielsweise bei hoher Drehzahl der Pumpe 1 schnell überschritten werden kann. Die Pumpenregelung selbst setzt also erstens mit einer gewissen Zeitverzögerung ein und wird zweitens durch eine eventuell dann gegenläufige Regelbewegung des Primärdruckregelventils 41 wiederrum in ihrer Stellgröße verändert und gegebenenfalls gestört. Das kann zu hohen Zeitverzögerungen und gegebenenfalls zu Instabilitäten der Regelung in verschiedenen Arbeitspunkten führen.

In Figur 1.2 wird ein anderer Stand der Technik dargestellt. Die Verstellpumpe 1 mit ihrer Kompensationskammer 9, ihrer Regeldruckkammer 11 und der darin befindlichen zusätzlichen Feder 19 sowie die entsprechenden Leitungen 15 und 17 entsprechen der Darstellung in Figur 1.1 und sollen hier nicht noch einmal erwähnt werden, um Wiederholungen zu vermeiden. Der Pumpenregler 70 selbst hat hier eine andere Struktur und ist daher mit der Bezugsziffer 70 versehen. Ein Steuerdruckraum 72, in welchem auch eine entsprechende Verstellfeder 74 die Grundposition des Regelkolbens 76 einstellt, ist mit einer Steuerdruckleitung 78 mit dem Steuerkreis 49 und damit mit dem im Steuerkreis 49 herrschenden Druck verbunden. Der Steuerkreis 49 mit seinem Druck wirkt wie in Figur 1.1 wieder auf die Fläche 45 des Primärdruckregelventils 41, auf welches auf der anderen Seite des Primärdruckregelventilkolbens der Druck im Primärhydraulikkreis 39 wirkt, wie bereits in Figur 1.1 beschrieben. Ferner wirkt auf das Druckminderventil 63 des Schmierhydraulikkreises 61 ebenfalls der Druck aus dem Steuerkreis 49. Das führt dazu, dass bei Erreichen des entsprechenden Druckes im Steuerkreis zumindest das Primärdruckregelventil 41, welches bei Erreichen des Primärdruckes öffnen soll, und der Pumpenregler 70, welcher ebenfalls bei Erreichen des Primärdruckes das Hubvolumen der Pumpe 1 zurückschwenken soll, im Wesentlichen gleichzeitig eingreifen sollen und sich damit gegenseitig bis zur Instabilität beeinflussen können. Des Weiteren wirkt zusätzlich der Steuerkreisdruck im Steuerkreis 49 zusätzlich zum Schmierkreisdruck auf das Druckminderventil 63, sodass auch hier wiederrum eine Veränderung und eventuelle Störung des Steuerkreisdrucks durch zusätzlich geschaltete Verbraucher auftreten können. Auf den Pumpenregler 70 wirkt auf eine kleine Ringfläche 80 der Pumpenauslassdruck aus der Pumpenauslassleitung 17, welcher bei Erreichen eines am Pumpenregler 70 eingestellten Maximaldrucks, welcher durch die Feder 74 und den Steuerdruck in der Steuerdruckkammer 72 eingestellt wird, eine Steuerkante des Pumpenreglers 70 zum Tankabfluss 82 öffnet und damit ein Zwischendruck zwischen dem Pumpenauslassdruck und dem Tankdruck in der Pumpenregelkammer 11 eingestellt wird.

In Figur 2 wird eine erfindungsgemäße Anordnung einer Verstellpumpe mit einer Getriebesteuerung dargestellt. Eine verstellbare Flügelzellenpumpe 100, welche hier gegenüber den vorhergehenden Figuren 1.1 und 1.2 mit umgekehrter Drehrichtung dargestellt ist, hat eine Auslassleitung 102, über welche eine Kompensationskammer 104 mit dem Pumpenauslassdruck beaufschlagt werden kann und dadurch den Hubring 105 der verstellbaren Flügelzellenpumpe 100 entsprechend bis in die Nullposition verstellen kann. Auf der Gegenseite des Hubrings 105 wirkt ein Druck aus dem Pumpenregler 110 über eine Regeldruckleitung 112 in der Regeldruckkammer 106 in aufregelnde Richtung wie auch die Aufregelfeder 108. Das Regelventil bzw. der Pumpenregler 110 ist in seiner Struktur etwas anderes dargestellt als in den vorherigen Figuren. Der Pumpenregler 110 ist mit seiner großen Kolbenfläche 114 im Druckraum, in welchem auch die auf den Regelkolben 120 wirksame Feder 116 angeordnet ist, mit dem Steuerkreis 49 des Automatikgetriebes verbunden. Auf einer entgegengesetzt wirksamen Ringfläche 118, die entsprechend kleiner ist, wirkt der Pumpenauslassdruck, also der im System maximale herrschende Hochdruck aus der Auslassleitung 102 der Flügelzellenpumpe 100. Die Regeldruckkammer 106 der Pumpe ist in der in Figur 2 dargestellten Position des Regelkolbens 120 des Pumpenreglers 110 über die Steuerleitung 122, über die erste Steuerkante 124 und über die Regeldruckleitung 112 stromab des Pumpenreglers 110 mit dem Pumpenauslassdruck in der Leitung 102 verbunden und somit die Pumpe voll aufgeregelt. Überschreitet die Kraft des Auslassdruckes auf die Ringfläche 118 die Kraft, welche durch den Druck aus dem Steuerkreis 49 auf die Kolbenfläche 114 und durch die Feder 116 ausgeübte Kraft erzeugt wird, so fährt der Regelkolben 120 gegen die Feder 116 nach rechts und öffnet dabei eine zweite Steuerkante 126, welche zusätzlich die Regeldruckleitung 112 mit dem Tank 128 verbindet. Der Tank 128 ist im Falle eines Automatikgetriebes beispielsweise der Ölsumpf am Boden des Automatikgetriebes. Bei diesem Zurückfahren des Regelkolbens 120, wie zuvor beschrieben, wird der Regeldruck in der Regeldruckkammer 106 abgesenkt, und die maximale Pumpenausschwenkung kann durch den Hochdruck in der Kompensationskammer 104 zurückgefahren werden. Der Primärhydraulikkreis 130 des Automatikgetriebes ist hier pauschal als hydraulischer Widerstandverbraucher dargestellt. Eine Bypassleitung 132 führt vom Primärhydraulickreis zu einem Primärdruckregelventil 134. Das Primärdruckregelventil 134 ist bei gegebenem Verstelldrücken in der Lage, einen Bypassvolumenstrom von der Leitung 132 in den Sekundärhydraulikkreis 136, der hier auch symbolisch durch einen hydraulischen Widerstand als Verbraucher dargestellt ist, zu leiten. In dieser Darstellung sind der Sekundärhydraulikkreis 136 und der Schmierkreis vereinfacht zu einem einzigen Hydraulikkreis ohne Zwischenschaltung eines Druckminderventiles dargestellt. Zusätzlich ist ein (erfindungsgemäßes) Schaltventil 138 im Hydraulikschaltkreis angeordnet, um das Primärdruckregelventil 134 in seiner Funktion abzuschalten bzw. zuzuschalten. Dazu wird das Schaltventil 138 zwischen Zuleitungen 140 und 142 angeordnet, die es entsprechend versperren bzw. öffnen kann, wobei die Zuleitung 142 in eine Fühldruckkammer 144 des Primärdruckregelventils 134 führt. Wird das Schaltventil 138 in seine Öffnungsposition geschaltet, was beispielsweise durch ein Absenken des Steuerdruckes im Steuerdruckkreis 49 geschieht, welcher auf eine Kolbenfläche des Schaltventils 138 in einer Steuerdruckkammer 148 wirkt, welche auch eine entsprechende Feder 150 enthält, gegenüber einer Ringfläche 146, auf welche über die Zuleitung 142 der Primärkreisdruck wirksam wird, so öffnet der Kolben des Ventils 138 die Verbindung zwischen den Leitungen 140 und 142 und erlaubt einen Zufluss aus dem Primärdruckkreis in die Fühldruckkammer 144 und damit einen Druckaufbau in der Fühldruckkammer 144, da der Abfluss aus der Fühldruckkammer 144 in einen Tank 154 bzw. den Ölsumpf des Automatikgetriebes durch einen hydraulischen Widerstand 152, beispielsweise in Form einer Drossel, begrenzt wird. Somit kann das Primärdruckregelventil 134 eine Steuerkante 156 zum Sekundärhydraulikkreis 136 öffnen und einen entsprechenden Bypassvolumenstrom aus dem Primärhydraulikkreis 130 bzw. der Hochdruckleitung 102 zum Sekundärhydraulikkreis 136 leiten, welcher dann auch zu einem Sekundärdruckaufbau im Sekundärhydraulikkreis 136 und damit zu einer wirksamen Sekundärdruckkraft auf die Kolbenfläche 158 im Druckraum mit der Feder 160 des Primärdruckventils 134 wirksam wird. Das bedeutet, dass in diesem Fall das separat schaltbare Ventil 138 es ermöglicht, zunächst das Primärdruckregelventil 134 außer Funktion zu setzten, sodass bis zum Einstellen des Primärdruckes nur der Pumpenregler 110 der Verstellpumpe 1 mit seinem Regelkreis wirksam wird. Erst bei Aufschalten eines Schaltsignales, entweder durch eine bestimmte Höhe des Steuerdrucks aus dem Steuerdruckkreis 49 und/oder gegebenenfalls durch einen hier nicht dargestellten externen Aktor, beispielsweise einen Elektromagneten, wird dann, nachdem der Pumpenregler 110 die Flügelzellenpumpe 100 eingeregelt und seinen Arbeitspunkt erreicht hat, das Primärdruckregelventil 134 zugeschaltet und kann ab dann eine zusätzliche Regelfunktion wahrnehmen, sodass bei Veränderungen des Volumenstromes im Primär- oder Sekundärhydraulikkreis eine weitere Regelveränderung des Pumpenreglers 110 keine großen Regelbewegungen mehr benötigt. Somit können durch Abkopplung der beiden Regelkreise von Pumpenregler 110 und Primärdruckregelventil 134 beim Anfahren des Hydrauliksystems große Regelsprünge und damit eventuelle Anregungen zur Instabilität begrenzt werden.

In der Figur 3 ist sowohl die Flügelzellenpumpe 100 mit ihren Druckkammern als auch der Pumpenregler 110 sowie das Primärdruckregelventil 134 und der Primärhydraulickreis 130, der Sekundärhydraulikkreis 136 und der Steuerkreis 49 wie in Figur 2 angeordnet und miteinander verschaltet, sodass für diese Bereiche die gleichen Bezugszeichen und die gleiche Funktionsbeschreibung bis auf die andere Anordnung eines Schaltventils 170 gilt. Das Schaltventil 170 ist in der Figur 3 zwischen die Fühldruckkammer 144 des Primärdruckregelventils 134 und den Tank 154 bzw. den Ölsumpf des Getriebes geschaltet. Das Schaltventil 170 ist im diesem Fall durch eine Feder 172 zunächst im drucklosen Zustand geöffnet, sodass vom Primärhydraulickreis 130 bzw. der Hochdruckleitung 102 ein Abfluss über eine Steuerleitung 174 aus diesem Hochdruck- bzw. Primärdruckbereich über einen hydraulischen Widerstand 176, beispielsweise in Form einer Drossel, zur Fühldruckkammer 144 erfolgt. Da die Verbindung im Abfluss 178 zum Tank 154 durch das Schaltventil 170 geöffnet ist, kann sich in der Fühldruckkammer 144 kein wesentlicher Druck aufbauen, welcher die Funktion des Primärdruckregelventils 134 in Gang setzen bzw. auslösen kann. Erst bei Schließen des Schaltventils 170, wobei ein entsprechender Steuerdruck aus dem Steuerdruckkreis 49 in den Druckraum des Schaltventils 170 mit der Feder 172 gegen den Primärdruck, welcher auf die Ringfläche 173 des Schaltventils 170 wirkt, die entsprechenden Stellkräfte überschreiten kann, wird das Schaltventil 170 geschlossen, und ein entsprechender Druckaufbau in der Fühldruckkammer 144 des Primärdruckregelventils 134 setzt die Primärdruckregelfunktion in Gang.

In Figur 4 ist eine weitere erfindungsgemäße Anordnung einer Verstellpumpe mit einer Getriebesteuerung dargestellt. Zunächst sind in Figur 4 sowohl die Verschaltung der Flügelzellenpumpe 100 mit ihrem Pumpenregler 110 als auch die prinzipielle Anordnung des Primärdruckregelventils 134, des Primärhydraulikkreises 130 und des Sekundärhydraulikkreises 136 identisch mit denen aus Figur 2 und 3. Der Unterschied besteht jetzt darin, dass die Fühldruckkammer 180 des Primärdruckregelventiles keinen Abfluss mehr hat, sodass der Primärdruck im Primärhydraulikkreis 130 bzw. in der Hochdruckleitung 102 direkt über einen Zufluss aus dem Primärhydraulikkreis 130 und nur durch eine Dämpfungsdrossel 182 gedämpft bzw. verzögert durch Zufluss und ohne Abfluss wirksam werden kann. Ein Schaltventil 184 ist in diesem Schaltplan zwischen den Abfluss 186 des Primärdruckregelventils 134 zum Sekundärhydraulickreis 136 geschaltet. Das bedeutet, dass nach Erreichen des am Primärdruckregelventil 134 eingestellten Primärdruckes das Primärdruckregelventil 134 ebenfalls funktionslos bleibt, solange das Ventil 184 geschlossen ist, da nach Öffnen der Steuerkante 188 der Primärdruck in der zum Sekundärkreis 136 durch das Ventil 184 abgesperrten Leitung 186 auch im Druckraum 190 mit der Feder des Primärdruckventils 134 wirksam wird und damit das Primärdruckregelventil 134 die Steuerkante 188 wieder in Richtung Schließstellung bringt. Erst nach Öffnen des Ventils 184, was dadurch geschieht, dass im Steuerkreis 49 der Steuerdruck auf die Druckwirkfläche der Drucckammer 192 zusammen mit der Feder 194 gegen den Primärdruck auf der Ringfläche 196 das Ventil 184 öffnen kann, kann auch das Primärdruckregelventil 134 in seine Regelposition fahren. Das heißt, dass auch in diesem Fall zunächst der Pumpenregler 110 mit der Flügelzellenpumpe 100 den entsprechenden Druck im Primärkreis 130 einregelt und danach bei einem entsprechenden Schaltsignal über das Schaltventil 184 der zweite Regelkreis, nämlich der des Primärdruckregelventils 134, hinzugeschaltet werden kann. Die Vorteile und Auswirkungen entsprechen denen, welche vorab in Figur 2 und 3 beschrieben wurden.

In Figur 5 wird eine weitere erfindungsgemäße Ausführung einer Verstellpumpe mit einer Getriebesteuerung dargestellt, welche sich prinzipiell dadurch unterscheidet, dass hier nicht zunächst ein Primärdruckregelventil 212 beim Anfahren der Getriebehydraulik außer Funktion gesetzt wird, sondern ein Regler 204 der Flügelzellenpumpe 100. Das Primärdruckregelventil 212 bildet also den Regler für den Regelkreis, der als erster seine Regelposition einnimmt, und danach kann über ein Schaltventil 200 zusätzlich der Pumpenregler 204 und damit die Verstellung der Flügelzellenpumpe 100 eingeschaltet werden. Die Anbindung, das heißt die Schaltung der Flügelzellenpumpe 100 selbst an den Pumpenregler 204 und auch die Kolben- bzw. Steuerkantenstruktur des Pumpenreglers 204 bleiben wie vorab in den Figuren 2, 3 und 4 beschrieben. Der Unterschied besteht darin, dass der Zufluss über die Leitung 202 zum Pumpenregler 204 über das Schaltventil 200 erfolgt, welches somit den Zufluss aus der Hochdruckleitung 102 bzw. dem Primärhydraulikkreis 130 öffnen bzw. absperren kann. Ansonsten wirkt der Steuerdruck aus dem Steuerkreis 49 wie in den Figuren 2, 3 und 4 auf die große Kolbenfläche 206 des Pumpenreglers 204 im Federraum des Pumpenreglers 204, allerdings in Figur 5 anders als in den Figuren 2, 3 und 4 direkt auf die Kolbenfläche 208 im Federraum 210 des Primärdruckregelventils 212. Auch hier besitzt die Fühldruckkammer 214 nur einen Zufluss aus dem Primärdruckkreis 130 über eine entsprechende Dämpfungsdrossel 216. Der Sekundärhydraulikkreis 218 ist in dieser Schaltung über ein Druckminderventil 224 vom Schmierhydraulikkreis 220 abgetrennt.

Bei direkter Verschaltung von bestehenden hydraulischen Getriebesteuerungen mit einer druckgeregelten Pumpe kann die Funktion der priorisierenden Verteilung der Pumpenfördermenge (Stand der Technik) zu regelungstechnischen Problemen führen.

Die Priorisierung der Ölmenge im Getriebe hat generell zunächst die Funktion, eine Mangelversorgung des Primärhydraulikkreises zu verhindern. Alle kraftübertragungsrelevanten Elemente im Getriebe werden über diesen Primärhydraulikkreis versorgt. Der Sekundärhydraulikkreis versorgt die Kühlung und Schmierung im Getriebe, also untergeordnete Funktionen. Ein Ziel der Erfindung ist es somit, bei geringen Fördermengen der Pumpe den Sekundärhydraulikkreis zu verschließen.

In bekannten Ausführungen von Priorisierungsverschaltungen wird ein Primärdruckregelventil eingesetzt, welches ab einem bestimmten einstellbaren Primärdruck den Sekundärhydraulikkreis öffnet und bei Abfall des Primärdrucks unter dieses Druckniveau wieder schließt. Liegt dieser Arbeitspunkt zu nahe am für die Pumpe einzustellenden Druckniveau kann es zu gegenseitigen Beeinflussungen kommen. Diesen Konflikt lösen die vorgeschlagenen Regelsysteme der Erfindung auf.

Die Lösung der Aufgabe besteht also in der Begrenzung der den Verbrauchern vorgeschalteten Regel-Ventiltypen, insbesondere der den Verbrauchern vorgeschalteten Ventile zur Priorisierung der Ölmenge, und der Trennung der beiden Funktionen der Druckregelung und Priorisierung. Die diese Lösung darstellenden Schaltungen sind beispielsweise in den Figuren 2 bis 5 dargestellt.

Priorisierung in diesen Ausführungen bedeutet, dass zuerst die Primärhydraulikkreismenge, dann die Sekundärhydraulikkreismenge, und dann die endgültige Volumenstrom-Menge der Verstellpumpe eingeregelt werden soll. Ziel der Erfindung ist es, die Regelgrößenbeaufschlagung für die Verstellpumpe und für die Getriebehydraulik als Verbraucher voneinander zu trennen.

Die hier vorgestellten erfinderischen Lösungen führen im Gegensatz zu den entsprechenden Stabilitätsproblemen im Stand der Technik, wie in den Figuren 1.1 und 1.2 beschrieben, zu einer Verkürzung der Strecke der Regelschleife durch temporäres Abschalten einer Regelschleife und damit zur Elimination von störenden gegenseitigen Einflüssen auf die Regelkreise, insbesondere deren Signalfluss. So können für die Reglereinheit "Verstellpumpe mit Regelventil" alle Funktionen und Verbraucher des Getriebes einfache Störgrößen darstellen im Gegensatz zu Regelkreisen, in denen Priorisierungsfunktionen für mehrere Regelschleifen geschaltet sind.

Zusätzlich weisen erfindungsgemäß die Primärdruckregelventile in den Figuren 2 bis 5 folgende Funktionen auf. Die Primärdruckregelventile werden zunächst durch den anstehenden Primärdruck in ihre Regelfunktion versetzt und öffnen bei Überschreiten eines Primärdruckniveaus eine Steuerkante zum Sekundärhydraulikkreis.

Von nun an wird durch die Rückführung des Sekundärdruckes auf das Primärdruckregelventil ein festes Verhältnis zwischen Primär- und Sekundärdruck eingeregelt. Beim Primärdruckregelventil in Figur 5 kommt zusätzlich noch die Steuerkreis-Druckkomponente dazu. Bei weiterem Ansteigen des Primärdruckes wird eine Steuerkante vom Primärhydraulikkreis zum Tank geöffnet, also eine zusätzliche Druckbegrenzungsfunktion tritt in Kraft. Wenn das Primärdruckregelventil durch ein vorgeschaltetes Ventil vom Primärhydraulikkreis abgetrennt wird, geht es erst bei geschaltetem Ventil in seine Funktion.

**Bezugszeichenliste**

| | | | |
|---|---|---|---|
| 1. | Flügelzellenpumpe | 59. | Druckwirkfläche |
| 3. | Hubring | 61. | Schmierhydraulikkreis |
| 5. | Rotor | 63. | Druckminderventil |
| 7. | Flügel | 70. | Pumpenregler |
| 9. | Kompensationskammer | 72. | Steuerdruckraum |
| 11. | Regeldruckkammer | 74. | Verstellfeder |
| 13. | Feder | 76. | Regelkolben |
| 15. | Steuerölleitung | 78. | Steuerdruckleitung |
| 17. | Leitung | 80. | Ringfläche |
| 19. | Steuerölleitung | 82. | Tankabfluss |
| 21. | Regelventil | 100. | Flügelzellenpumpe |
| 23. | Leitung | 102. | Auslassleitung |
| 25. | Tankleitung | 104. | Kompensationskammer |
| 27. | Regelkolben | 105. | Hubring |
| 29. | Feder | 106. | Regeldruckkammer |
| 31. | Druckwirkfläche | 108. | Aufregelfeder |
| 33. | Steuerleitung | 110. | Pumpenregler |
| 35. | Druckwirkfläche | 112. | Regeldruckleitung |
| 37. | Steuerdruckleitung | 114. | Kolbenfläche |
| 39. | Primärhydraulikkreis | 116. | Feder |
| 41. | Primärdruckregelventil | 118. | Ringfläche |
| 43. | Druckkammer | 120. | Regelkolben |
| 45. | Steuerfläche | 122. | Steuerleitung |
| 47. | Steuerleitung | 124. | Steuerkante |
| 49. | Steuerkreis | 126. | Steuerkante |
| 51. | Feder | 128. | Tank |
| 53. | Leitung | 130. | Primärhydraulikkreis |
| 55. | Sekundärhydraulikkreis | 132. | Bypassleitung |
| 57. | Leitung | 134. | Primärdruckregelventil |
| 136. | Sekundärhydraulikkreis | 224. | Druckminderventil |
| 138. | Schaltventil | | |
| 140. | Zuleitung | | |
| 142. | Zuleitung, Zufluss | | |
| 144. | Fühldruckkammer | | |
| 146. | Ringfläche | | |
| 148 | Steuerdruckkammer | | |
| 150. | Feder | | |
| 152. | Widerstand | | |
| 154. | Tank | | |
| 158. | Kolbenfläche | | |
| 160. | Feder | | |
| 170. | Schaltventil | | |
| 172. | Feder | | |
| 173. | Ringfläche | | |
| 174. | Steuerleitung | | |
| 176. | Widerstand | | |
| 178. | Abfluss | | |
| 180. | Fühldruckkammer | | |
| 182. | Dämpfungsdrossel | | |
| 184. | Schaltventil | | |
| 186. | Abfluss/Leitung | | |
| 188. | Steuerkante | | |
| 196. | Ringfläche | | |
| 200. | Schaltventil | | |
| 204. | Regler/Pumpenregler | | |
| 206. | Kolbenfläche | | |
| 208. | Kolbenfläche | | |
| 210. | Federraum | | |
| 212. | Primärdruckregelventil | | |
| 214. | Fühldruckkammer | | |
| 216. | Dämpfungsdrossel | | |
| 218. | Sekundärhydraulikkreis | | |

## Patentansprüche

1. Verstellpumpe für hydraulische Getriebesteuerungen, insbesondere Flügelzellenpumpe (1, 100), mit variablem Hubvolumen und mit einem Pumpenregler für Ablauf - Druckregelung, bei welchem der Auslassdruck der Pumpe in einer Kompensationskammer (9) und ein durch den Pumpenregler einstellbarer Regeldruck in einer Regeldruckkammer (11, 106) auf einen verstellbaren Hubring (3, 105) wirkt, wobei der Druck in der Regeldruckkammer (11, 106) sowie eine zusätzliche Federkraft den Hubring (3, 105) in Richtung maximale Ausschwenkung, d.h. maximales Hubvolumen, verstellt, und mit einer Getriebesteuerung für Automatikgetriebe, welche einen Primärhydraulikkreis (39, 130) für die kraftübertragungsrelevanten Elemente des Getriebes aufweist und ein Primärdruckregelventil (41, 134, 212), welches bei Erreichen bzw. Überschreiten des einstellbaren Primärdrucks einen Bypass zu einem Sekundärhydraulikkreis (55, 136, 218) öffnet und bei weiterem Überschreiten des Primärdrucks eine zusätzliche Druckbegrenzungsfunktion für den Primärdruck aufweist,
und wobei der Sekundärhydraulikkreis (55, 136, 218) der Kühlung und Schmierung des Getriebes dient, **dadurch gekennzeichnet, dass** ein zusätzliches Schaltventil (138, 170, 184, 200) eine Anbindung an den Primärhydraulikkreis (39, 130) und das Primärdruckregelventil (41, 134, 212) besitzt und die Regelschleifen bzw. Regelkreise der Pumpenregelung und der Getriebe-Primärdruckregelung voneinander abtrennt oder verbindet und somit die Regelschleifen bzw. Regelkreise der Pumpenregelung und der Getriebe-Primärdruckregelung unabhängig einzeln über einen Steuerkreis (49) zuschaltbar oder zusammenschaltbar sind.

2. Verstellpumpe und Getriebesteuerung nach Anspruch 1, **dadurch gekennzeichnet, dass** durch das Schaltventil (138, 170) eine Fühldruckkammer (144) des Primärdruckregelventils (134) für den Primärdruck gegenüber dem Primärhydraulikkreis (130) über den Zufluss (142) der Fühldruckkammer (144) oder über den Abfluss (178) der Fühldruckkammer (144) zu- oder abgeschaltet werden kann.

3. Verstellpumpe und Getriebesteuerung nach Anspruch 1, **dadurch gekennzeichnet, dass** durch das Schaltventil (184) der Sekundärhydraulikkreiszufluss bzw. die Sekundärhydraulikkreisverbindung vom Primärdruckregelventil (134) zu- oder abschaltbar ist.

4. Verstellpumpe und Getriebesteuerung nach Anspruch 1, **dadurch gekennzeichnet, dass** der Zufluss/die Verbindung zum Pumpenregler (204) bzw. zur Regeldruckkammer (106) aus dem Primärdruckkreis/Primärhydraulikkreis (130) durch das Schaltventil (200) zu- oder abgeschaltet werden kann.

5. Verstellpumpe und Getriebesteuerung nach Anspruch 2, **dadurch gekennzeichnet, dass** der Zufluss der Fühldruckkammer (144) des Primärdruckregelventils (134) vom Primärhydraulikkreis (130) durch das Schaltventil (138) zu- oder abschaltbar ist und der Abfluss der Fühldruckkammer (144) über einen hydraulischen Widerstand (152) bzw. eine Drossel zu einem Tank (154) bzw. Ölsumpf erfolgt.

6. Verstellpumpe und Getriebesteuerung nach Anspruch 2, **dadurch gekennzeichnet, dass** der Abfluss (178) der Fühldruckkammer (144) zum Tank (154) bzw. Ölsumpf durch das Schaltventil (170) zu- bzw. abschaltbar ist und der Zufluss (142) zur Fühldruckkammer vom Primärhydraulikkreis über einen hydraulischen Widerstand (176) bzw. eine Drossel erfolgt.

7. Verstellpumpe und Getriebesteuerung nach Anspruch 2 oder 5, **dadurch gekennzeichnet, dass** ein Steuerdruck eines Steuerkreises (49) der Getriebesteuerung auf eine Kolbenfläche (114) des Pumpenreglers (110) wirkt und auf das Schaltventil (138) (Federraumfläche) schließend wirkt.

8. Verstellpumpe und Getriebesteuerung nach Anspruch 2 oder 6, **dadurch gekennzeichnet, dass** der Steuerdruck eines Steuerkreises (49) der Getriebesteuerung auf eine Kolbenfläche (114) des Pumpenreglers (110) wirkt und auf den Federraum des Schaltventils (170) öffnend wirkt.

9. Verstellpumpe und Getriebesteuerung nach Anspruch 3, **dadurch gekennzeichnet, dass** der Steuerdruck eines Steuerkreises (49) der Getriebesteuerung auf eine Kolbenfläche (114) des Pumpenreglers (110) wirkt und auf den Federraum des Schaltventils (184) öffnend wirkt.

10. Verstellpumpe und Getriebesteuerung nach Anspruch 4, **dadurch gekennzeichnet, dass** ein Steuerdruck eines Steuerkreises (49) der Getriebesteuerung auf eine Kolbenfläche (206) des Pumpenreglers (204) wirkt und auf die Kolbenfläche (208) des Primärdruckregelventils (212), und der Sekundärdruck öffnend auf das Schaltventil (200) wirkt.

11. Verstellpumpe und Getriebesteuerung nach einem der vorhergehenden Ansprüche , **dadurch gekennzeichnet, dass** das Schaltventil (138, 170, 184, 200) hydraulisch und/oder elektrisch ansteuerbar ist.

## Claims

1. Variable displacement pump for hydraulic gearbox control systems, in particular vane pump (1, 100), with variable stroke volume and with a pump controller for outflow pressure control, in the case of which the outlet pressure of the pump in a compensation chamber (9) and a control pressure, which can be set by the pump controller, in a control pressure chamber (11, 106) acts on an adjustable stroke ring (3, 105), wherein the pressure in the control pressure chamber (11, 106) and an additional spring force move the stroke ring (3, 105) in the direction of maximum swiveling out, i.e. maximum stroke volume,
and with a gearbox control system for automatic gearboxes which has a primary hydraulic circuit (39, 130) for the elements of the gearbox which are relevant to the transmission of force and a primary pressure control valve (41, 134, 212) which, upon reaching or exceeding the adjustable primary pressure, opens a bypass to a secondary hydraulic circuit (55, 136, 218) and, in the event of further exceeding of the primary pressure, has an additional pressure limiting function for the primary pressure,
and wherein the secondary hydraulic circuit (55, 136, 218) serves the purpose of cooling and lubrication of the gearbox,
**characterized in that** an additional shift valve (138, 170, 184, 200) has a connection to the primary hydraulic circuit (39, 130) and the primary pressure control valve (41, 134, 212) and the control loops or control circuits of the pump control and the gearbox primary pressure control are separated from one another or are connected and thus the control loops or control circuits of the pump control and the gearbox primary pressure control can be activated or interconnected independently and individually by means of a control circuit (49).

2. Variable displacement pump and gearbox control system according to Claim 1, **characterized in that** a sensing pressure chamber (144) of the primary pressure control valve (134) for the primary pressure can be activated or deactivated with respect to the primary hydraulic circuit (130) via the inflow (142) of the sensing pressure chamber (144) or via the outflow (178) of the sensing pressure chamber (144) by the shift valve (138, 170).

3. Variable displacement pump and gearbox control system according to Claim 1, **characterized in that** the secondary hydraulic circuit inflow or the secondary hydraulic circuit connection of the primary pressure control valve (134) can be activated or deactivated by the shift valve (184).

4. Variable displacement pump and gearbox control system according to Claim 1, **characterized in that** the inflow/the connection to the pump controller (204) or to the control pressure chamber (106) from the primary pressure circuit/primary hydraulic circuit (130) can be activated or deactivated by the shift valve (200).

5. Variable displacement pump and gearbox control system according to Claim 2, **characterized in that** the inflow of the sensing pressure chamber (144) of the primary pressure control valve (134) from the primary hydraulic circuit (130) can be activated or deactivated by the shift valve (138) and the outflow of the sensing pressure chamber (144) is performed via a hydraulic resistance (152) or a throttle to a tank (154) or oil sump.

6. Variable displacement pump and gearbox control system according to Claim 2, **characterized in that** the outflow (178) of the sensing pressure chamber (144) to the tank (154) or oil sump can be activated or deactivated by the shift valve (170) and the inflow (142) of the sensing pressure chamber from the primary hydraulic circuit is performed via a hydraulic resistance (176) or a throttle.

7. Variable displacement pump and gearbox control system according to Claim 2 or 5, **characterized in that** a control pressure of a control circuit (49) of the gearbox control system acts on a piston surface (114) of the pump controller (110) and acts on the shift valve (138) (spring space surface) in a closing direction.

8. Variable displacement pump and gearbox control system according to Claim 2 or 6, **characterized in that** the control pressure of a control circuit (49) of the gearbox control system acts on a piston surface (114) of the pump controller (110) and acts on the spring space of the shift valve (170) in an opening direction.

9. Variable displacement pump and gearbox control system according to Claim 3, **characterized in that** the control pressure of a control circuit (49) of the gearbox control system acts on a piston surface (114) of the pump controller (110) and acts on the spring space of the shift valve (184) in an opening direction.

10. Variable displacement pump and gearbox control system according to Claim 4, **characterized in that** a control pressure of a control circuit (49) of the gearbox control system acts on a piston surface (206) of the pump controller (204) and on the piston surface (208) of the primary pressure control valve (212), and the secondary pressure acts in an opening direction on the shift valve (200).

11. Variable displacement pump and gearbox control system according to any one of the preceding claims, **characterized in that** the shift valve (138, 170, 184, 200) can be actuated hydraulically and/or electrically.

## Revendications

1. Pompe à cylindrée variable pour commande hydraulique de transmission, notamment pompe (1, 100) à palettes, à course de volume variable et présentant
un régulateur de pompe qui régule le débit et la pression et dans lequel la pression de refoulement de la pompe dans une chambre de compensation (9) et une pression de régulation établie par le régulateur de pression dans une chambre de pression de régulation (11, 106) agissent sur une bague ajustable de course (3, 105), la pression régnant dans la chambre de pression de régulation (11, 106) ainsi qu'une force élastique supplémentaire déplaçant la bague de course (3, 105) en direction de son déplacement maximum, c'est-à-dire de sa course de volume maximum, et
une commande pour transmission automatique qui présente un circuit hydraulique primaire (39, 130) pour les éléments de la transmission intervenant dans la transmission de force et une soupape (41, 134, 212) de régulation de la pression primaire qui ouvre une dérivation vers un circuit hydraulique secondaire (55, 136, 218) lorsque la pression primaire réglable est atteinte ou dépassée et qui assure une fonction supplémentaire de limitation de la pression primaire lorsque la pression primaire est dépassée,
le circuit hydraulique secondaire (55, 136, 218) servant au refroidissement et à la lubrification de la transmission,
**caractérisée en ce qu'**une soupape supplémentaire de commutation (138, 170, 184, 200) est reliée au circuit hydraulique primaire (39, 130) et à la soupape (41, 134, 212) de régulation de la pression primaire et sépare ou relie mutuellement les boucles de régulation ou les circuits de régulation de la régulateur de pression, de telle sorte que les boucles de régulation ou les circuits de régulation de la régulateur de pression et de la régulation de la pression primaire de la transmission puissent être branchées ou rassemblées indépendamment des unes des autres par l'intermédiaire d'un circuit de commande (49).

2. Pompe à cylindrée variable et commande de transmission selon la revendication 1, **caractérisées en ce qu'**au moyen de la soupape de commutation (138, 180), une chambre (144) de pression pilote de la soupape de régulation de la pression primaire (134) pour la pression primaire peur être branchée ou débranchée par rapport au circuit hydraulique primaire (130) par l'intermédiaire du débit d'amenée (142) à la chambre (144) de pression pilote ou par l'intermédiaire du débit de sortie (178) hors de la chambre (144) de pression pilote.

3. Pompe à cylindrée variable et commande de transmission selon la revendication 1, **caractérisées en ce que** le débit d'amenée dans le circuit hydraulique secondaire ou la liaison au circuit hydraulique secondaire par la soupape de régulation de la pression primaire (134) peuvent être branchés ou débranchés par la soupape de commutation (184).

4. Pompe à cylindrée variable et commande de transmission selon la revendication 1, **caractérisées en ce que** le débit d'amenée/la liaison au régulateur de pression (204) ou à la chambre de pression de régulation (106) peuvent être branchés ou débranchés depuis le circuit hydraulique primaire (130)/le circuit de pression primaire par la soupape de commutation (200).

5. Pompe à cylindrée variable et commande de transmission selon la revendication 2, **caractérisées en ce que** le débit d'amenée à la chambre (144) de pression pilote de la soupape de régulation de la pression primaire (134) depuis le circuit hydraulique primaire (130) peut être branché ou débranché par la soupape de commutation (138) et **en ce que** le débit de sortie de la chambre (144) de pression pilote vers un réservoir (154) ou un fond de cuve à huile s'effectue par l'intermédiaire d'une résistance hydraulique (152) ou d'un étranglement.

6. Pompe à cylindrée variable et commande de transmission selon la revendication 2, **caractérisées en ce que** le débit de sortie (178) de la chambre (144) de pression pilote vers un réservoir (154) ou un fond de cuve à huile peut être branché ou débranché par l'intermédiaire de la soupape de commutation (170) et **en ce que** le débit d'amenée (142) vers la chambre à pression pilote du circuit hydraulique primaire s'effectue par l'intermédiaire d'une résistance hydraulique (176) ou d'un étranglement.

7. Pompe à cylindrée variable et commande de transmission selon les revendications 2 ou 5, **caractérisées en ce que** la pression de commande d'un circuit de commande (49) de la commande de transmission agit sur une surface de piston (114) de régulateur de pression (110) et sur la soupape de commutation (138) (surface de l'espace à ressort) dans le sens de sa fermeture.

8. Pompe à cylindrée variable et commande de transmission selon les revendications 2 ou 6, **caractérisées en ce que** la pression de commande d'un circuit de commande (49) de la commande de transmission agit sur une surface de piston (114) de régulateur de pression (110) et sur la surface de l'espace à ressort de la soupape de commutation (170) dans le sens de son ouverture.

9. Pompe à cylindrée variable et commande de transmission selon la revendication 3, **caractérisées en ce que** la pression de commande d'un circuit de commande (49) de la commande de transmission agit sur une surface de piston (114) de régulateur de pression (110) et l'espace à ressort de la soupape de commutation (184) dans le sens de son ouverture.

10. Pompe à cylindrée variable et commande de transmission selon la revendication 4, **caractérisées en ce que** la pression de commande d'un circuit de commande (49) de la commande de transmission agit sur une surface de piston (206) du régulateur de pression (204) et sur la surface de piston (208) de la soupape de régulation de la pression primaire (212) et **en ce que** la pression secondaire agit sur la soupape de commutation (200) dans le sens de son ouverture.

11. Pompe à cylindrée variable et commande de transmission selon l'une des revendications précédentes, **caractérisées en ce que** la soupape de commutation (138, 170, 184, 200) peut être commandée hydrauliquement et/ou électriquement.
